**Europäisches Patentamt**

**European Patent Office**

**Office européen des brevets**

(19)

(11) Veröffentlichungsnummer : **0 338 047 B1**

(12) **EUROPÄISCHE PATENTSCHRIFT**

(45) Veröffentlichungstag der Patentschrift :
**29.04.92 Patentblatt 92/18**

(21) Anmeldenummer : **88908943.9**

(22) Anmeldetag : **14.10.88**

(86) Internationale Anmeldenummer :
**PCT/DE88/00632**

(87) Internationale Veröffentlichungsnummer :
**WO 89/03291 20.04.89 Gazette 89/09**

(51) Int. Cl.⁵ : **B29B 17/00, B29C 67/22,**
**// B29K75:00, B29K105:04**

(54) **KÖRPER, INSBESONDERE IN FORM EINER PLATTE UND VERFHAREN ZUM HERSTELLEN EINES SOLCHEN KÖRPERS.**

(30) Priorität : **17.10.87 DE 3735196**
**26.02.88 DE 3806108**

(43) Veröffentlichungstag der Anmeldung :
**25.10.89 Patentblatt 89/43**

(45) Bekanntmachung des Hinweises auf die
Patenterteilung :
**29.04.92 Patentblatt 92/18**

(84) Benannte Vertragsstaaten :
**DE FR GB NL**

(56) Entgegenhaltungen :
**EP-A- 0 037 860**
**FR-A- 2 585 619**
**GB-A- 1 189 996**
**US-A- 3 452 122**

(56) Entgegenhaltungen :
**US-A- 3 594 335**
**US-A- 4 243 625**
**PATENT ABSTRACTS OF JAPAN, Vol. 6,**
**No.105 (M-136) (983) 15 June 1982 &**
**JP,A,57036630 (MATSUSHITA DENKO K.K.) 27**
**February 1982**

(73) Patentinhaber : **HOFMANN, Simone**
**Plöckensteinstrasse 7**
**W-7030 Böblingen (DE)**

(72) Erfinder : **HOFMANN, Alwin**
**Max-Eyth-Strasse 15**
**W-7446 Oberboihingen (DE)**

(74) Vertreter : **Held, Martin, Dr.-Ing. et al**
**Patentanwälte Bartels, Fink, Held Lange**
**Strasse 51**
**W-7000 Stuttgart 1 (DE)**

EP 0 338 047 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft einen Körper, insbesondere in Form einer Platte, der die Merkmale des Oberbegriffs des Anspruches 1 aufweist, sowie ein Verfahren zur Herstellung eines Körpers, welches die Merkmale des Oberbegriffs des Anspruches 10 aufweist.

Es ist bekannt (JP-A-57 36 630), für die Herstellung von Wärmeisoliermaterial Partikel aus weichem Polyurethanschaumstoff mit einem Durchmesser von wenigstens 5 mm und Partikel eines harten Kunststoffschaumes mit einem Durchmesser von höchstens 5 mm mit einem Bindemittel zu vermischen und in einer Form so stark zu komprimieren, daß sich ein im Bereich zwischen 0,03 und 0,04 liegendes spezifisches Gewicht ergibt. Die Druckbelastbarkeit und die Biegefestigkeit dieses Materials ist relativ gering.

Zur Herstellung eines flexiblen, als Teppichunterlage dienenden Material ist es ferner bekannt (US-A-4 243 625), Partikel eines Polyurethanschaumes, die mit Hilfe einer Mühle erzeugt worden sind, mit einem Bindemittel zu mischen und dieses Schüttgut in eine zylindrische Form einzugeben und dann vorzupressen, damit beim Transport der Form in eine Aushärtungsstation das Schüttgut nicht über den Rand der Form heraustritt. In der Aushärtestation wird in die Form Luft oder Dampf eingeleitet, um das Schüttgut fließfähig zu machen, damit das Endprodukt eine gleichmäßige Dichte erhält. Außerdem wird in der Aushärtestation das Schüttgut erneut zusammengepreßt. Nach der Entnahme des zylindrischen Körpers aus der Form wird von dem Körper eine bandförmige Bahn abgeschält. Auch auf diese Weise lassen sich keine Körper mit hoher Biegefestigkeit herstellen.

Eine geringe Bruchfestigkeit und eine geringe Biegefähigkeit haben bekannte Platten (NL-A-68 08 556), die aus einem Gemisch aus hundert Teilen eines Staubes aus hartem Polyurethanschaumstoff mit sechs Teilen eines technischen 4,4'-Diisocyanato-diphenylmethans als wasserabstoßendes Bindemittel hergestellt werden, wobei das Schüttgut 10 Minuten lang bei einem Druck von 200 kp/cm² bei einer Temperatur von 130° C zu einer Platte verpreßt wird. Die so hergestellten Platten sind nur zu Isolationszwecken verwendbar. Außerdem ist das Zermahlen des harten Polyurethanschaumstoffes zu Pulver energieaufwendig.

Der Erfindung liegt die Aufgabe zugrunde, einen Körper der eingangs genannten Art zu schaffen, der gegenüber den bekannten Körpern verbesserte mechanische Eigenschaften, insbesondere hinsichtlich der Elastizität und der Bruchfestigkeit, hat. Diese Aufgabe löst ein Körper mit den Merkmalen des Anspruches 1.

Durch die Beigabe von Integralschaum-Granulat zu dem Granulat aus hartem Polyurethanschaum lassen sich nicht nur sehr günstige mechanische Werte erreichen, die beispielsweise die Verwendung erfindungsgemäßer Platten als Bauplatten und anstelle von Spanplatten ermöglichen. Vorteilhaft ist ferner, daß dann, wenn Polyurethanschaumabfall mit unterschiedlichen Härteeinstellungen verarbeitet werden muß, wie das in der Regel der Fall sein wird, durch die Beigabe von Integralschaum-Granulat sich vermeiden läßt, daß Bereiche mit unterschiedlichen Eigenschaften auftreten.

Mit der Beigabe von Integralschaum-Granulat kann ferner die erforderliche Schütthöhe vor dem Pressen reduziert werden, wodurch unbrauchbare Randbereiche weitgehend vermieden werden.

Platten, die gemäß der Erfindung ausgebildet sind, haben beispielsweise bei einer Dicke von etwa 8 bis 11 mm eine Biegefestigkeit von mindestens 22 N/mm², eine Dickenquellung von weniger als 2 % und einen Feuchtigkeitsgehalt von weniger als 3 %. Damit sind sie beispielsweise auch als Bauplatten verwendbar. Für eine Verwendung als Sportbodenplatten ist bedeutsam, daß sich eine mittlere Standartduchbiegung von etwa 4,5 mm mit einer maximalen Abweichung von 12,5 %, eine Energiegewinnung von etwa 88 % oder ein Energieverlust von etwa 12 % und bei einer Belastung mit einem Normgewicht eines Sportlers eine Durchbiegungsmulde in der Draufsicht von nur 35 bis 40 cm erreichen lassen.

Das Integralschaum-Granulat kann eine Mischung aus weichem und hartem Integralschaum sein. Durch die harten Partikel wird eine gute Armierung und durch die weichen Partikel eine gute Verbindung zwischen den harten Partikeln erreicht.

Der Erfindung liegt auch die Aufgabe zugrunde, die bekannten Verfahren zu verbessern, und zwar auch dahingehend, daß die hergestellten Körper verbesserte Eigenschaften erhalten. Diese Aufgabe löst ein Verfahren mit den Merkmalen des Anspruches 10.

Besonders vorteilhaft ist es, wenn beim Mischen des Schüttgutes mit dem vorzugsweise zerstäubten Bindemittel das Gemisch auf mindestens 25° C vorgewärmt wird.

Außer der Verarbeitung von Abfällen aus Polyurethanschaum, der unterschiedliche Härteeinstellungen haben kann, können auch andere Abfälle verwertet werden.

Vorteilhaft sind Abfallpartikel, die in der gleichen Weise auf einer Schlägermühle wie das Granulat aus Polyurethanschaum zerkleinert werden und die auch aus einem faserigen Stoff bestehen können, zum Beispiel aus Glasfasern und/oder Textilfasern und/oder Asbest und/oder Leder und/oder Zellulose. Als weitere Partikel können ferner zerkleinerte längliche Gummipartikel verwendet werden, die durch Zerkleinerung von abgefahrenen Reifen und dergleichen gewonnen werden können.

Bei einer Reihe von Anwendungsgebieten, beispielsweise bei Platten für Sportböden, ist es besonders vorteilhaft, dem Polyurethanschaum-Granulat ein Integralschaum-Granulat beizufügen, wobei es sich bei dem Integralschaum auch um eine Mischung aus weichem und hartem Integralschaum handeln kann. Die Korngröße des Integralschaum-Granulates ist vorteilhafterweise kleiner als diejenige des Polyurethanschaum-Granulates. Vorzugsweise beträgt diese nur 50 % der Korngröße des Polyurethanschaum-Granulats. Weiterhin kann dem Polyurethanschaum-Granulat oder der Mischung aus Polyurethan-Granulat und Integralschaum-Granulat ein Polyätherschaum-Granulat beigemischt werden.

Bei der Verwendung verschiedener Materialien für das Schüttgut hat es sich als vorteilhaft erwiesen, wenn der Mindestgehalt an Polyurethanschaumpartikeln 80 % beträgt. Wird jedoch Integralschaum-Granulat beigemischt, was vorzugsweise in einem Pflugscharmischer erfolgt, dann kann der Anteil in Integralschaum-Material an der Gesamtmenge 10 % bis 90 % betragen. Vorzugsweise sind aber 50 % bis 90 % des gesamten Granulatgemisches Integralschaum-Granulat.

Eine weitere vorteilhafte Ausführungsform des Verfahrens ist dadurch gekennzeichnet, daß eine erste Schicht des Gemisches auf eine Unterlage geschichtet wird, daß auf die erste Schicht als Armierung ein Gebilde von sich kreuzenden Fäden aufgelegt wird, daß auf das Armierungsgebilde eine zweite Schicht des Gemisches geschichtet wird und daß die so gebildete Doppelschicht anschließend in den zwei Preßvorgängen gepreßt wird.

Eine nach diesem Verfahren hergestellte Platte hat eine wesentlich verbesserte Biegefestigkeit, wobei es sich herausgestellt hat, daß die Ergebnisse besonders gut sind, wenn die zweite Schicht in im wesentlichen gleicher Höhe wie die erste Schicht geschichtet wird, so daß bei der nach diesem Verfahren hergestellten Platte das Armierungsgebilde sich etwa in der Mitte zwischen den beiden Breitseiten der Platte befindet. Sind den Polyurethanschaumpartikeln Integralschaumpartikel beigemischt, dann kann in vielen Fällen auf eine zusätzliche Armierung verzichtet werden, weil die harten Partikel des harten Integralschaumes eine Wirkung wie ein Armierungsnetz entfalten.

Die Erfindung ist in den folgenden Beispielen und in der Zeichnung im einzelnen erläutert.

Die Zeichnung zeigt in

Fig. 1 eine Stirnansicht eines Ausführungsbeispiels einer Platte;

Fig. 2 einen Schnitt nach der Linie II - II in Fig. 1.

Beispiel 1:

100 Gewichtsteile von Polyurethan-Hartschaum-Abfällen werden in einer auch Granulatmühle genannten Schlagmühle mit einem Sieb, dessen Rundlöcher einen Durchmesser von höchstens 10 mm haben, zu einem Schüttgut zerkleinert. Das so gewonnene Schüttgut wird mit 6 Gewichtsteilen eines einkomponentigen Polyurethan-Bindemittels gemischt, wobei das Bindemittel während des Mischens durch eine feine Düse mit Überdruck als Nebel dem Schüttgut zugeführt wird. Das Gemisch wird beim Mischen auf eine Temperatur von 25 bis 30°C vorgewärmt. Mittels einer Schüttvorrichtung wird dann eine Schicht des Gemisches von 10 cm Höhe in eine Form eingebracht. Als Form kann hierbei auch ein Förderband benutzt werden, das seitlich begrenzt ist, wie es beim Herstellen von Spanplatten verwendet wird.

In einer Vorpresse wird dann das Gemisch mit einem Druck von 10 kp/cm² vorgepreßt. Das vorgepreßte Gemisch wird in eine beheizbare Presse eingebracht und bei einer Temperatur von 150°C etwa 1,5 bis 2 Minuten lang mit einem Druck von 25 kp/cm² zu einer Platte mit einer Dicke von etwa 10 mm gepreßt. Anschließend wird die so hergestellte Platte auf das gewünschte Format geschnitten.

Die nach diesem Beispiel hergestellte Platte hat folgende Werte:

Eine Biegefestigkeit nach DIN 52 362 von mindestens 23,0 N/mm²,

eine Dickenquellung nach DIN 52 364 von 1 %,

einen Feuchtigkeitsgehalt nach Klimatisierung im Normalklima 20/65 nach DIN 50 014 von höchstens 2 %.

Diese Werte übertreffen bei weitem die für die Prüfung von Holzspanplatten der Verleimungsart V 100 nach DIN 68 763 geforderten Werte.

Diese Platte hat auch für Sportböden besonders vorteilhafte Werte, und zwar nach DIN 18 032

eine mittlere Standarddurchbiegung von 4,5 mm mit einer maximalen Abweichung von nicht mehr als 12,5 % (dieser Wert konnte mit bisher bekannten Platten nicht erzielt werden),

eine Energierückgewinnung von 88 % und damit einen Energieverlust von 12 %,

die Durchbiegungsmulde beim Normalgewicht eines Sportlers hat in der Draufsicht einen Durchmesser von nur 35 bis 40 cm (bei Spanplatten beträgt dieser Durchmesser 80 bis 100 cm).

Beispiel 2:

In gleicher Weise wie beim Beispiel 1 wird eine Platte hergestellt. Das Beispiel 2 unterscheidet sich vom Beispiel 1 nur dadurch, daß das Schüttgut 70 Gewichtsteile von Polyurethan-Hartschaum-Abfällen und 30 Gewichtsteile in derselben Mühle zerkleinerter Abfälle von Glasfasern und/oder Textilien und/oder Cellulose und/oder Asbestfasern und/oder Gummi enthält.

Durch die Beimischung von 30 Gewichtsteilen anderer Abfallpartikel werden die nach dem Beispiel 1 erzielten Werte nicht verschlechtert.

Dadurch, daß bei der Verwendung von Asbestabfällen die Asbestpartikel in der Platte eingeschlossen sind, können Asbestabfälle umweltfreundlich verwendet werden.

Beispiel 3:

Dieses Beispiel unterscheidet sich von dem Beispiel 2 nur dadurch, daß die 30 Gewichtsteile von anderen Abfällen als Polyurethanschaum eine Beimengung von Lederfasern enthalten, die ebenfalls in der im Beispiel 1 genannten Schlagmühle aus Lederabfällen gewonnen wurden.

Bei gleichen übrigen Werten hatte die nach diesem Beispiel hergestellte Platte einen geringfügig höheren Feuchtigkeitsgehalt.

Beispiel 4:

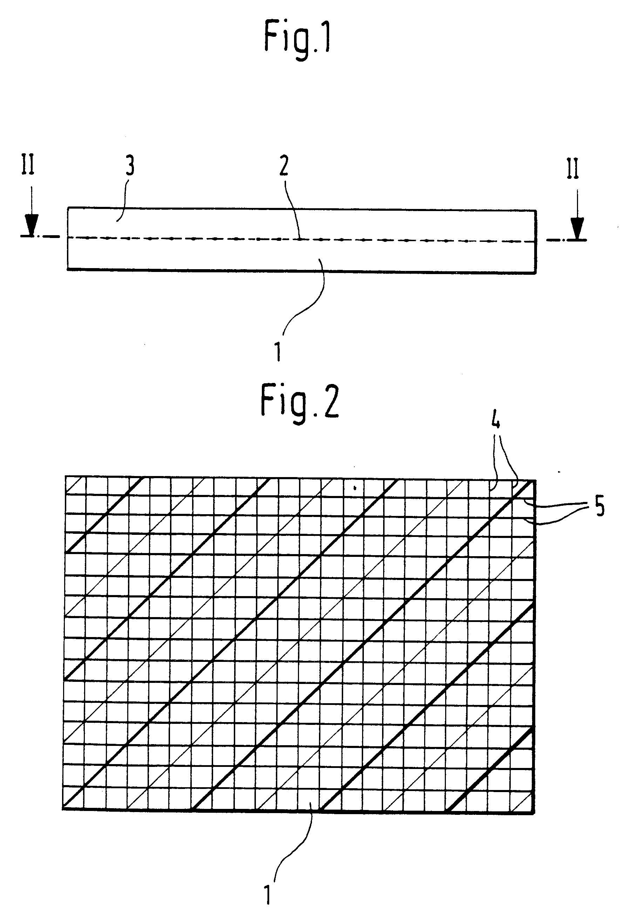

Diese Platte wird aus dem gleichen Gemisch hergestellt wie das in den Beispielen 1 bis 3 beschrieben ist. Dieses Gemisch wird dann in eine Form in einer Schichthöhe von 5 cm Höhe eingebracht. Auf diese erste Schicht 1 (Fig.1) wird ein Armierungsgebilde 3 in Form eines Glasfadengittergewebes aufgelegt, dessen einander parallelen Fäden 4 und die dazu senkrechten, einander parallelen Fäden 5 sich jeweils in einem Abstand von 2,5 cm voneinander befinden. Auf dieses Armierungsgebilde 2 wird dann eine zweite Schicht 3 von ebenfalls 5 cm aufgeschichtet. Dann wird diese armierte Doppelschicht, wie im Beispiel 1 beschrieben, weiterbehandelt. Dadurch erhält man eine Platte, die bei gleichen Werten der Platten nach den Beispielen 1 bis 3 eine mindestens um 25 % verbesserte Biegefestigkeit besitzt.

Für das Armierungsgebilde 2 können auch Polyesterfäden verwendet werden. Auch können die Fäden 4 und 5 z.B. vliesartig aufeinandergelegt sein.

Beispiel 5:

40 Gewichtsanteile von Polyurethan-Hartschaum-Abfällen und 60 Gewichtsanteile eines Gemisches aus hartem und weichem Integralschaum werden getrennt voneinander in einer auch Granulatmühle genannten Schlagmühle zu Granulat zerkleinert. Für den Polyurethan-Hartschaum ist die Schlagmühle mit einem Sieb versehen, dessen Rundlöcher einen Durchmesser von 10 mm haben. Für den Integralschaum ist die Schlagmühle mit einem Sieb versehen, dessen Rundlöcher einen Durchmesser von 5 - 10 mm, vorzugsweise von 5 mm haben. Das Polyurethan-Hartschaum-Granulat und das Integralschaum-Granulat werden in einem Pflugscharmischer gemischt, und zwar unter Beigabe eines zerstäubten Bindemittels. Das Gemisch wird beim Mischen auf eine Temperatur von 25°C bis 30°C vorgewärmt. Mittels einer Schüttvorrichtung wird dann eine Schicht des Gemisches von 10 cm Höhe in eine Form gebracht. Als Form kann hierbei auch ein Förderband benutzt werden, das seitlich begrenzt ist, wie es beim Herstellen von Spanplatten verwendet wird.

In einer Vorpresse wird dann das Gemisch mit einem Druck von 10 kp/cm$^2$ vorgepreßt. Das vorgepreßte Gemisch wird in eine beheizbare Presse eingebracht und bei einer Temperatur von 150°C etwa 1,5 bis 2 Minuten lang mit einem Druck von 25 kp/cm$^2$ zu einer Platte mit einer Dicke von etwa 10 mm gepreßt. Anschließend wird die so hergestellte Platte auf das gewünschte Format geschnitten.

Alle in der vorstehenden Beschreibung erwähnten sowie auch die nur allein aus der Zeichnung entnehmbaren Merkmale sind als weitere Ausgestaltungen Bestandteile der Erfindung, auch wenn Sie nicht besonders hervorgehoben und insbesondere nicht in den Ansprüchen erwähnt sind.

**Patentansprüche**

1. Körper, insbesondere in Form einer Platte, der ein gepreßtes Gemisch aus Partikeln verschiedener Schaumstoffe mit einer Korngröße von höchstens 10 mm und bindemittel enthält, wobei wenigstens einer der verschiedenen Schaumstoffe ein harter Schaumstoff ist, dadurch gekennzeichnet, daß

EP 0 338 047 B1

a) als Partikel Granulat verwendet wird,

b) das Gemisch hartes Polyurethanschaum-Granulat und Integralschaum-Granulat enthält, und

c) der Anteil des Integralschaum-Granulats 10 Gewichtsprozente bis 90 Gewichtsprozente beträgt.

2. Körper nach Anspruch 1, dadurch gekennzeichnet, daß das Integralschaum-Granulat eine Mischung aus weichem und hartem Integralschaum ist.

3. Körper nach Anspruch 1 oder 2, dadurch gekennzeichnet, daß der Anteil des Integralschaum-Granulats 50 Gewichtsprozente bis 90 Gewichtsprozente beträgt.

4. Körper nach einem der Ansprüche 1 bis 3, dadurch gekennzeichnet, daß die Korngröße des Integralschaum-Granulats höchstens 50% der Korngröße des harten Polyurethanschaum-Granulates beträgt.

5. Körper in Form einer Platte nach einem der Ansprüche 1 bis 4, dadurch gekennzeichnet, daß sie einen Gehalt von höchstens 50 % eines faserigen Stoffes hat.

6. Körper in Form einer Platte nach einem der Ansprüche 1 bis 5, dadurch gekennzeichnet, daß sie einen Gehalt von höchstens 50 % von länglichen Gummischnitzeln hat.

7. Körper in Form einer Platte nach einem der Ansprüche 1 bis 6, dadurch gekennzeichnet, daß sie etwa in ihrer Mitte ein sich über ihre ganze Breitseite erstreckendes Armierungsgebilde (2) aus zugfesten Fäden hat.

8. Körper in Form einer Platte nach Anspruch 7, dadurch gekennzeichnet, daß als Armierungsgebilde (2) ein Gittergewebe aus Glas- oder Polyesterfäden (4,5) vorgesehen ist.

9. Körper in Form einer Platte nach Anspruch 8, dadurch gekennzeichnet, daß der Abstand der Fäden (4,5) des Gittergewebes voneinander 1 bis 5 cm, vorzugsweise 2,5 cm beträgt.

10. Verfahren zur Herstellung eines Körpers, insbesondere eines Körpers gemäß Anspruch 1, wobei ein Gemisch aus einem durch Mahlen gewonnenen Schüttgut, das Partikel aus Polyurethanschaum enthält, und einem wasserabstoßenden Bindemittel in zwei aufeinanderfolgenden Preßvorgängen gepreßt wird, dadurch gekennzeichnet, daß

a) die Partikel aus Polyurethanschaum durch Mahlen von hartem Polyurethenschaum in einer Schlägermühle gewonnen werden, deren Sieblöcher eine lichte Weite von höchstens 10 mm aufweisen,

b) ein Schüttgut verwendet wird, das mindestens 50 % Polyurethanschaumpartikel enthält,

c) beim ersten Preßvorgang das Gemisch einem Druck von höchstens 20 kp/cm$^2$ ausgesetzt wird, und

d) beim zweiten Preßvorgang das Gemisch bei einer Temperatur von weniger als 170° C einem Druck von höchstens 40 kp/cm$^2$ ausgesetzt wird.

11. Verfahren nach Anspruch 10, dadurch gekennzeichnet, daß beim Mischen des Schüttgutes mit dem Bindemittel das Gemisch auf mindestens 25°C vorgewärmt wird.

12. Verfahren nach Anspruch 10 oder 11, dadurch gekennzeichnet, daß der zweite Preßvorgang bei einer Temperatur von etwa 150° C durchgeführt wird.

13. Verfahren nach einem der Ansprüche 10 bis 12, dadurch gekennzeichnet, daß der erste Preßvorgang mit einem Druck von etwa 10 kp/cm$^2$ und der zweite 1,5 bis 2 Minuten lang mit einem Druck von etwa 25 kp/cm$^2$ durchgeführt wird.

14. Verfahren nach einem der Ansprüche 10 bis 13, dadurch gekennzeichnet, daß als Bindemittel ein Polyurethankleber verwendet wird.

15. Verfahren nach einem der Ansprüche 10 bis 14, dadurch gekennzeichnet, daß das Bindemittel in einer Menge von wenigstens 5 Gewinchtsprozent des Schüttgutes diesem beigemischt wird.

16. Verfahren nach einem der Ansprüche 10 bis 15, dadurch gekennzeichnet, daß bei einem Schüttgut mit weniger als 100 % Polyurethanschaumpartikeln weitere Partikel aus einem faserigen Stoff verwendet werden.

17. Verfahren nach Anspruch 16, dadurch gekennzeichnet, daß als faseriger Stoff Glasfasern und/oder Textilfasern und/oder Asbest und/oder Leder und/oder Zellulose verwendet wird.

18. Verfahren nach einem der Ansprüche 10 bis 17, dadurch gekennzeichnet, daß bei einem Schüttgut mit weniger als 100 % Polyurethanschaumpartikeln weitere Partikel aus Gummi verwendet werden.

19. Verfahren nach einem der Ansprüche 10 bis 18, dadurch gekennzeichnet, daß ein Schüttgut mit einem Mindestgehalt von 80 % Polyurethanschaumpartikeln verwendet wird.

20. Verfahren nach einem der Ansprüche 10 bis 19, dadurch gekennzeichnet, daß das Schüttgut beim Pressen auf etwa ein Zehntel seiner Höhe zusammengepreßt wird.

21. Verfahren nach einem der Ansprüche 10 bis 20, dadurch gekennzeichnet,

– daß eine erste Schicht des Gemisches auf eine Unterlage geschichtet wird,

– daß auf die erste Schicht als Armierung ein Gebilde von sich kreuzenden Fäden aufgelegt wird,

– daß auf das Armierungsgebilde eine zweite Schicht des Gemisches geschichtet wird und

– daß die so gebildete Doppelschicht anschließend in den zwei Preßvorgängen gepreßt wird.

22. Verfahren nach Anspruch 21, dadurch gekennzeichnet, daß die zweite Schicht in im wesentlichen gleicher Höhe wie die erste Schicht geschichtet wird.

5

23. Verfahren nach Anspruch 21 oder 22, dadurch gekennzeichnet, daß als Armierungsgebildete ein Gittergewebe verwendet wird.

24. Verfahren nach Anspruch 23, dadurch gekennzeichnet, daß ein Gittergewebe mit einem Fadenabstand von 1 bis 5 cm, vorzugsweise von 2,5 cm, verwendet wird.

25. Verfahren nach einem der Ansprüche 21 bis 24, dadurch gekennzeichnet, daß für das Armierungsgebildete Glasfasern oder Polyesterfäden verwendet werden.

## Claims

1. A body, particularly in the form of a panel, containing a compressed mixture of particles of various foamed substances with a granular size of at most 10 mm and binders, at least one of the various foamed materials being a rigid foamed material, characterised in that

   a) granulate is used as the particles

   b) the mixture contains hard polyurethane foam granulate and integral foam granulate, and

   c) the proportion of integral foam granulate amounts to 10% by weight to 99% by weight.

2. A body according to claim 1, characterised in that the integral foam granulate is a mixture of soft and hard integral foam.

3. A body according to claim 1 or 2, characterised in that the proportion of integral foam granulate amounts to 50% by weight to 90% by weight.

4. A body according to one of claims 1 to 3, characterised in that the granular size of the integral foam granulate amounts to at most 50% of the granular size of the hard polyurethane foam granulate.

5. A body in the form of a panel according to one of claims 1 to 4, characterised in that it has a content of at most 50% of a fibrous substance.

6. A body in the form of a panel according to one of claims 1 to 5, characterised in that it has a content of at most 50% of elongate rubber chips.

7. A body in the form of a panel according to one of claims 1 to 6, characterised in that it has in its centre and extending over its entire broad side, a reinforcing structure (2) which takes the form of traction-resistant threads.

8. A body in the form of a panel according to claim 7, characterised in that the reinforcing structure (2) is a lattice work of glass or polyester fibres (4, 5).

9. A body in the form of a panel according to claim 8, characterised in that the distance between the threads (4, 5) of the lattice work amounts to 1 to 5 cm and preferably 2.5 cm.

10. A method of producing a body, particularly a body according to claim 1, in which a mixture of a bulk material obtained by grinding and which contains particles of polyurethane foam, and a water-repellent binder is press-moulded in two successive pressing operations, characterised in that

   a) the particles of polyurethane foam are obtained by grinding polyurethane foam in a pug mill, in which the screen holes have an inside diameter of at most 10 mm,

   b) a bulk material is used which contains at least 50% polyurethane foam particles,

   c) during the first press moulding operation, the mixture is exposed to a pressure of not more than 20 kp/sq.cm., and

   d) during the second press moulding process the mixture is exposed to a temperature of less that 170°C and a pressure of not more than 40 kp/sq.cm.

11. A method according to claim 10, characterised in that when mixing the bulk material with the binder the mixture is preheated to at least 25°C.

12. A method according to claim 10 or 11, characterised in that the second press moulding process is carried out at a temperature of about 150°C.

13. A method according to one of claims 10 to 12, characterised in that the first press moulding operation is carried out at a pressure of about 10 kp/sq.cm while the second is carried out for $1\frac{1}{2}$ to 2 minutes at a pressure of about 25 kp/sq. cm.

14. A method according to one of claims 10 to 13, characterised in that a polyurethane glue is used as the binder.

15. A method according to one of claims 10 to 14, characterised in that the binder is added to the bulk material in a qualtity of at least 5% by weight of the bulk material.

16. A method according to one of claims 10 to 15, characterised in that in the case of a bulk material of less than 100% polyurethane foam particles, further particles of a fibrous material are used.

17. A method according to claim 16, characterised in that glass fibres and/or textile fibres and/or asbestos and/or leather and/or cellulose are used as the fibrous materials.

18. A method according to one of claims 10 to 17, characterised in that in the case of a bulk materials of less than 100% polyurethane foam particles, further particles of rubber are used.

19. A method according to one of claims 10 to 18, characterised in that a bulk material having a minimum content of 80% polyurethane foam particles is used.

20. A method according to one of claims 10 to 19, characterised in that during press moulding the bulk material is compressed to about one-tenth of its height.

21. A method according to one of claims 10 to 20, characterised

– in that a first layer of the mixture is coated onto a backing

– and in that as a reinforcement, a structure of intersecting threads is laid onto the first layer,

– and in that a second layer of the mixture is layered onto the reinforcing structure,

– and in that the double layer thus formed is then compressed during the two pressure moulding stages.

22. A method according to claim 21, characterised in that the second layer is applied to substantially the same height as the first layer.

23. A method according to claim 21 or 22, characterised in that a lattice-work fabric is used as the reinforcing structure.

24. A method according to claim 23, characterised in that a lattice-work fabric is used in which the threads are 1 to 5 cm and preferably 2.5 cm apart.

25. A method according to one of claims 21 to 24, characterised in that glass fibres or polyester threads are used for the reinforcing structure.


**Revendications**

1. Corps, en particulier ayant la forme d'une plaque, qui contient un mélange comprimé de particules de différentes mousses ayant une granulométrie maximale de 10 mm et d'un liant, au moins l'une des différentes mousses étant une mousse dure, caractérisé en ce que

a) les particules utilisées sont des granulés,

b) le mélange contient des granulés durs de mousse de polyuréthanne et des granulés de mousse à peau intégrée, et

c) la proportion du granulé de mousse à peau intégrée est de 10 pour cents en poids à 90 pour cents en poids.

2. Corps selon la revendication 1, caractérisé en ce que le granulé de mousse à peau intégrée est un mélange de mousse souple et de mousse dure à peau intégrée.

3. Corps selon la revendication 1 ou 2, caractérisé en ce que la proportion du granulé de mousse à peau intégrée est de 50 pour cents en poids à 90 pour cents en poids.

4. Corps selon l'une des revendications 1 à 3, caractérisé en ce que la granulométrie du granulé de mousse à peau intégrée est au maximum de 50 % de la granulométrie du granulé de mousse dure de polyuréthanne.

5. Corps ayant la forme d'une plaque selon l'une des revendications 1 à 4, caractérisé en ce qu'elle a une teneur maximale de 50 % en une matière fibreuse.

6. Corps ayant la forme d'une plaque selon l'une des revendications 1 à 5, caractérisé en ce qu'elle a une teneur maximale de 50 % en rognures allongées de caoutchouc.

7. Corps ayant la forme d'une plaque selon l'une des revendications 1 à 6, caractérisé en ce qu'elle comporte approximativement au milieu une structure d'armature (2) formée de fils résistant à la traction et s'étendant sur la totalité de son côté large.

8. Corps ayant la forme d'une plaque selon la revendication 7, caractérisé en ce que la structure d'armature (2) qui est prévue est un tissu treillissé de fils de verre ou de polyester (4, 5).

9. Corps ayant la forme d'une plaque selon la revendication 8, caractérisé en ce que la distance séparant les fils (4, 5) du tissu treillissé est de 1 à 5 cm, de préférence de 2,5 cm.

10. Procédé de production d'un corps, en particulier d'un corps selon la revendication 1, suivant lequel un mélange de matière en vrac obtenu par broyage et contenant des particules de mousse de polyuréthanne, ainsi que d'un liant hydrophobe est comprimé en deux processus successifs de compression, caractérisé en ce que

a) les particules de mousse de polyuréthane sont obtenues par broyage de mousse dure de polyuréthane dans un broyeur à percussion dont les trous du crible ont une largeur d'ouverture maximale de 10 mm,

b) un produit en vrac utilisé contient au moins 50 % de particules de mousse de polyuréthanne,

c) le mélange est soumis à une pression maximale de 20 kg/cm² au premier processus de compression et

d) le mélange est soumis au second processus de compression à une pression maximale de 40 kg/cm² et à une température inférieure à 170°C.

11. Procédé selon la revendication 10, caractérisé en ce que le mélange est préchauffé à au moins 25°C lors du mélange de la matière en vrac avec le liant.

12. Procédé selon la revendication 10 ou 11, caractérisé en ce que le second processus de compression est exécuté à une température d'environ 150°C.

13. Procédé selon l'une des revendications 10 à 12, caractérisé en ce que le premier processus de compression est exécuté à une pression d'environ 10 kg/cm$^2$ et le second, à une pression d'environ 25 kg/cm$^2$ pendant 1,5 à 2 minutes.

14. Procédé selon l'une des revendications 10 à 13, caractérisé en ce que le liant est une colle à base de polyuréthanne.

15. Procédé selon l'une des revendications 10 à 14, caractérisé en ce que le liant est additionné à la matière en vrac en une quantité d'au moins 5 pour cents en poids de cette dernière.

16. Procédé selon l'une des revendications 10 à 15, caractérisé en ce que, lorsque la matière en vrac contient moins de 100 % de particules de mousse de polyuréthane, d'autres particules d'une matière fibreuse sont utilisées.

17. Procédé selon la revendication 16, caractérisé en ce que la matière fibreuse utilisée consiste en des fibres de verre et/ou des fibres de produit textile et/ou de l'amiante et/ou de cuir et/ou de la cellulose.

18. Procédé selon l'une des revendications 10 à 17, caractérisé en ce que, lorsque la matière en vrac contient moins de 100 % de particules de mousse de polyuréthanne, d'autres particules de caoutchouc sont utilisées.

19. Procédé selon l'une des revendications 10 à 18, caractérisé en ce que la matière en vrac utilisée contient au minimum 80 % de particules de mousse de polyuréthanne.

20. Procédé selon l'une des revendications 10 à 19, caractérisé en ce qu'au cours de sa compression, la matière en vrac est comprimé à environ un dixième de sa hauteur.

21. Procédé selon l'une des revendications 10 à 20, caractérisé
– en ce qu'une première couche du mélange est déposée sur un substrat,
– en ce qu'une armature constituée d'une structure de fils se croisant est déposée sur la première couche,
– en ce qu'une seconde couche du mélange est déposée sur la structure d'armature et
– en ce que la couche double ainsi formée est ensuite comprimée au cours des deux processus de compression.

22. Procédé selon la revendication 21, caractérisé en ce que la seconde couche est déposée à une hauteur sensiblement égale à celle de la première couche.

23. Procédé selon la revendication 21 ou 22, caractérisé en ce que la structure d'armature est un tissu treillissé.

24. Procédé selon la revendication 23, caractérisé en ce que le tissus treillissé qui est utilisé comprend des fils qui sont à une distance les uns des autres de 1 à 5 cm, de préférence de 2,5 cm.

25. Procédé selon l'une des revendications 21 à 24, caractérisé en ce que des fibres de verre ou des fils de polyester sont utilisés pour la structure d'armature.

# Fig.1

# Fig.2